# FASCICULE DE BREVET EUROPEEN

(11) **EP 1 151 832 B1**
(45) Date de publication et mention de la délivrance du brevet: **27.07.2005**
(21) Numéro de dépôt: 01110709.1
(22) Date de dépôt: 03.05.2001
(51) Int. Cl.: B26D 7/00

(54) **Machine de traitement de feuilles**
Maschine zur Bogenbearbeitung
Sheets treating machine

(30) Priorité: 05.05.2000 CH 8842000
(43) Date de publication de la demande: 07.11.2001
(73) Titulaire: BOBST S.A., 1001 Lausanne (CH)
(72) Inventeur: Rebeaud, Jean-Claude, 1052 Le Mont-Sur-Lausanne (CH)
(74) Mandataire: Colomb, Claude

(56) Documents cités:
- EP-A- 0 653 825
- US-A- 4 408 975

## Description

La présente invention concerne une machine de traitement de feuilles fonctionnant par cycles, au cours desquels une pièce mobile de la machine produit une surpression d'air cyclique dans une partie carrossée de ladite machine.

Dans de nombreuses machines du type défini d'entrée, une suite de surpressions et de dépressions, de l'ordre de quelques millibars à quelques dizaines de millibars, résultent du mouvement d'une pièce ou d'un ensemble de pièces mobiles qui pénètrent cycliquement, partiellement ou totalement, dans une partie de la machine protégée par une carrosserie et en ressortent.

De façon générale, une carrosserie a une fonction de protection, mais n'a pas pour fonction de constituer une enveloppe totalement étanche : les carrosseries de machines présentent généralement un certain nombre d'ouvertures, de fentes, qui laissent passer des tringles ou leviers de commande, des câbles, des arbres d'entraînement et autres.

Le fonctionnement des pièces mobiles nécessite généralement une lubrification par graisse ou huile. Pendant le fonctionnement normal de ces pièces, une quantité faible, mais non négligeable de cette graisse ou huile au contact des pièces en mouvement est projetée dans l'atmosphère environnante sous forme de gouttes ou gouttelettes ou s'évapore. L'évaporation peut concerner sélectivement certains constituants du (des) produit(s) de lubrification.

Du fait du déplacement d'air et de la surpression engendrée par le mouvement des pièces mobiles, il y a entrée et sortie d'air de la partie carrossée. L'air sortant entraîne avec lui des gouttes ou gouttelettes ou des constituants vaporisés du produit de lubrification. Ces gouttes ou vapeurs génèrent dans l'atelier où fonctionne la machine une odeur qui peut incommoder les conducteurs de machines. Il est alors souhaitable de rechercher des moyens pour éviter que de tels produits ne se répandent dans l'atmosphère de l'atelier.

Dans le cas particulier des presses automatiques de façonnage d'emballages en papier ou carton, il peut de plus se produire une adsorption de gouttelettes ou de vapeurs d'huile sur les feuilles de papier ou de carton en cours de façonnage. Il y a donc un risque que les poses découpées, destinées à constituer des boîtes pliantes, présentent, suite au façonnage, des traces d'huile ou de graisse de machine ou même des odeurs indésirables, ce qui amènerait à les juger impropres à l'usage, notamment dans le domaine alimentaire ou pharmaceutique.

Le but de la présente invention est de proposer des moyens pour réduire, voire supprimer les émanations d'huile dues au fonctionnement de telles machines.

Ce but est atteint dans une machine du type défini d'entrée en agençant dans la carrosserie de la partie carrossée où se produit la variation de pression cyclique, une ouverture, sur le périmètre de laquelle est fixée une membrane, le matériau constituant ladite membrane étant choisi parmi les matériaux élastiques, sensiblement imperméables et résistants aux produits de lubrification de ladite partie de la machine de telle façon que,
sous l'effet de la surpression interne momentanée, la membrane se gonfle, ajoutant au volume de la partie carrossée un volume additionnel que vient occuper momentanément au moins une partie de l'air qui, en l'absence de ce dispositif, s'échapperait dans l'atmosphère.

Selon l'invention, le matériau formant la membrane est un matériau élastique. Cette élasticité ramène la membrane à sa position initiale au cours de chaque cycle.

Une feuille de matériau souple mais inélastique ne convient pas. Les essais du déposant ont montré qu'une membrane constituée d'une feuille de matière plastique souple mais substantiellement inélastique a tendance à produire un bruit de claquement indésirable à chaque cycle de la machine. De plus, alors que l'homme du métier penserait a priori qu'en disposant et en fixant une feuille de matière plastique en forme de poche sur le pourtour d'une ouverture de la carrosserie, cette poche se gonflerait et se dégonflerait à chaque cycle opératoire de la machine, les essais ont montré qu'en réalité une telle enceinte en matière souple mais inélastique se gonfle peu à peu au cours d'une phase transitoire après démarrage de la machine et finit par rester presque entièrement gonflée : le bilan sortie/entrée d'air à chaque cycle de l'ensemble constitué par la carrosserie garnie d'une poche ou enceinte de matière souple et inélastique n'est pas nul, jusqu'à ce que l'enceinte soit entièrement gonflée. Lorsque l'état stationnaire de gonflement est atteint, le système devient de ce fait totalement inefficace.

Au contraire, avec une membrane élastique, le bilan sortie/entrée d'air s'équilibre très rapidement après quelques cycles machine du fait de l'élasticité de la membrane, qui tend à ramener celle-ci à sa position de repos.

De préférence, le matériau de la membrane est sensiblement perméable à l'air.

Durant la phase de surpression à l'intérieur de la carrosserie et de gonflement de la membrane, les fuites d'air par les autres ouvertures de la carrosserie sont réduites du fait de la présence de la membrane mais ne sont pas nulles. Une membrane imperméable à l'huile mais perméable à l'air joue le rôle d'un filtre laissant passer une partie de l'air à chaque phase de surpression, diminuant ainsi la valeur maximale de la surpression. Cette diminution contribue à diminuer davantage les fuites par les autres ouvertures.

La membrane peut prendre la configuration d'une vessie ou d'une poche dont les bords sont solidarisés avec les bords d'une ouverture correspondante de la carrosserie, par exemple au moyen d'un flasque. Une telle poche peut prendre la configuration d'un accordéon.

Selon un mode d'exécution préféré de l'invention, la carrosserie comprend un cadre, formant les bords de l'ouverture sur laquelle est fixée la membrane, entoilé avec la membrane. La membrane est dans ce cas de préférence légèrement tendue sur ce cadre, même lorsque la machine est au repos, pour éviter des claquements lors du fonctionnement cyclique. La membrane se distant alternativement vers l'intérieur et vers l'extérieur du cadre lorsque la machine est en fonctionnement.

Pour éviter que le mouvement de la membrane, qui est un mouvement de vibration, ne soit en retard de phase, voire en opposition de phase avec le cycle de fonctionnement de la machine, on peut choisir les dimensions du cadre et le matériau de la membrane, de telle sorte que le temps de relaxation du cadre entoilé soit inférieur à la période du cycle de la machine.

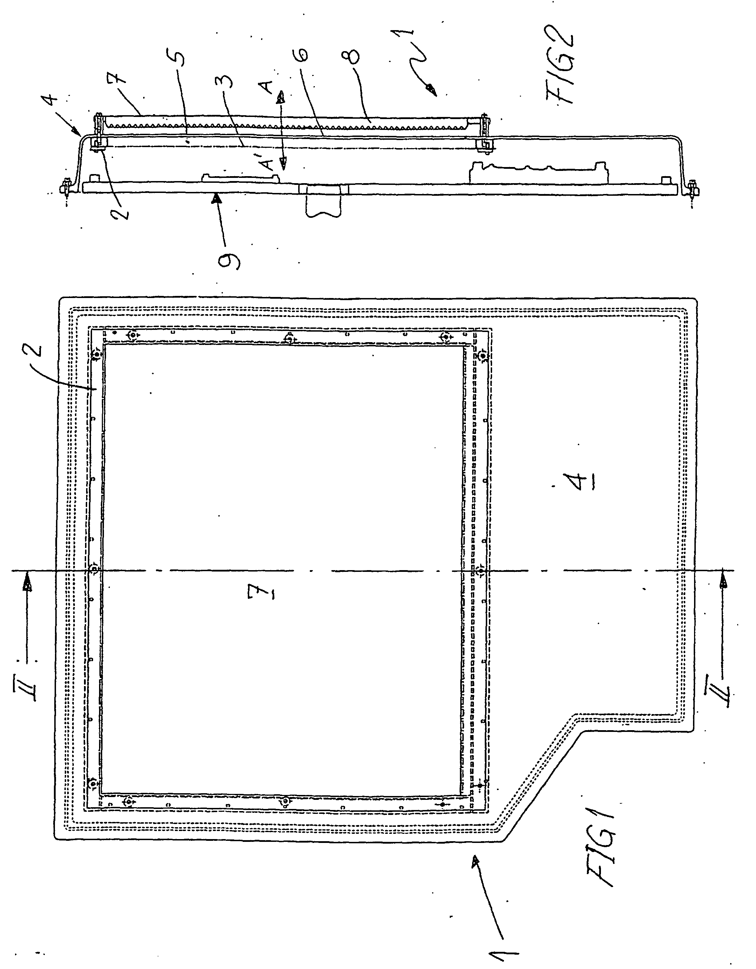

D'autres particularités et avantages de l'invention apparaîtront pour l'homme de métier de la description d'un mode d'exécution particulier de l'invention en relation avec le dessin, dans lequel la figure 1 représente une vue en coupe et en perspective d'une partie de carrosserie selon l'invention.

La figure 1 montre le capot de carrosserie 1 qui recouvre et protège le système d'entraînement général d'une presse automatique de façonnage d'emballages en papier ou carton. Dans ce type de machine, ce dispositif d'entraînement est généralement situé du côté opposé au conducteur, à proximité de la platine à découper. Le sommier mobile de la platine à découper est généralement séparé du dispositif d'entraînement par une paroi interne. Toutefois, celle-ci est percée de plusieurs ouvertures pour laisser passer des arbres et des chaînes d'entraînement.

Le volume d'air situé en dessous du sommier mobile de la station de découpe est en communication fluide avec le volume d'air qui entoure les pièces en mouvement de l'entraînement général; l'ensemble des pièces entraînant le sommier mobile et l'ensemble des pièces de l'entraînement général sont abondamment graissées et constituent la principale source d'émanations de graisses et/ou d'huile d'une telle presse de façonnage. La partie de la machine où sont situées les principales pièces du dispositif d'entraînement général présente, par ailleurs, par nécessité des ouvertures sur d'autres parties de la machine, par exemple pour laisser passer des chaînes d'entraînement, et donc communiquant avec l'atmosphère environnante. Le déplacement du sommier mobile de la station de découpe entraîne à chaque cycle de montée et de descente un déplacement d'air d'un volume de l'ordre de 50 à 70 litres. Si toutes les ouvertures de la carrosserie de la machine à ce niveau sont obturées/étanchéifiées au maximum, on constate expérimentalement une augmentation de pression dans la zone de la machine située sous la platine de découpe et autour des pièces d'entraînement général de l'ordre de 40-50 millibars.

La figure 2 est une vue schématique en coupe selon II-II de la figure 1.

Comme le montre la figure 2, le capot de carrosserie 1 de l'entraînement général de la machine 9 comporte, monté à l'intérieur d'une partie surélevée 4, un cadre 2 bordant une ouverture 5. Les dimensions de l'ouverture sont d'environ 1 mètre de large sur environ 1,80 mètres de haut. Sur ce cadre est fixé et légèrement tendu un tissu 3, élastique aussi bien dans le sens de la chaîne que dans celui de la trame, qui est imperméable et résistant aux projections d'huile. Bien entendu, ce tissu 3 peut-être sensiblement perméable à l'air mais dans des limites n'affectant pas la fonction recherchée.

A titre d'exemple, on peut utiliser le produit Isofilm Liner de la société Angst Pfister (Suisse). Ce produit est constitué à 81% de PA, à 19% de PUE; il a des propriétés de coupe-vent, mais il est sensiblement perméable à l'air. Il est hydro- et oléophobe. Il présente une élasticité d'environ 80% dans le sens de la longueur et d'environ 60% dans le sens de la largeur, pour une épaisseur de l'ordre de 0,65 millimètres et un poids au m² d'environ 240g/m².

Dans le capot, en regard et à distance du tissu élastique 3, est ménagée une deuxième ouverture 6 garnie d'un dispositif de protection pouvant prendre, par exemple la forme d'une grille 7 ou de tout autre dispositif protecteur laissant passer l'air déplacé par le mouvement de la membrane.

Une paroi 8 d'absorption phonique peut être associée à la grille 7 afin de diminuer le bruit de fonctionnement lorsque la membrane est en mouvement.

Lorsque le capot de la machine 9 est muni de cette membrane en tissu, on constate, pendant le fonctionnement de la machine que le mouvement de gonflement et de dégonflement de la membrane, dans le sens des flèches A A', est synchrone avec le fonctionnement de la machine. La surpression mesurée à l'intérieur de la partie carrossée équipée de la membrane est de l'ordre 10 à 15 millibars, soit approximativement du quart au tiers de la surpression observée lorsque le capot est intégralement fermé. Un simple test olfactif permet de constater la nette diminution des odeurs d'huile dans un atelier où la machine fonctionne en conditions normales et en continu.

## Revendications

1. Machine de traitement de feuilles fonctionnant par cycles, au cours desquels une pièce mobile de la machine produit une surpression d'air cyclique dans une partie carrossée de ladite machine, **caractérisée en ce que** la carrosserie (1) de ladite partie carrossée présente une ouverture (5), sur le périmètre de laquelle est fixée une membrane, le matériau constituant ladite membrane étant choisi parmi les matériaux élastiques, sensiblement imperméables et résistants aux produits de lubrification de ladite partie de la machine de telle façon que, sous l'effet de la supression interne momentanée, la membrane se gonfle, ajoutant au volume de la partie carrousseé un volume additionnel que vient ocuper momentanément au moins une partie de l'air qui, en absence de ce dispositif, s'échapperait dans l'atmosphère.

2. Machine selon la revendication 1, **caractérisée en ce que** ledit matériau de la membrane est élastique et sensiblement perméable à l'air.

3. Machine selon les revendications 1 ou 2, **caractérisée en ce que** ladite membrane forme une enceinte en forme de poche, de vessie ou d'accordéon.

4. Machine selon les revendications 1 ou 2, **caractérisée en ce que** ladite carrosserie (1) de ladite partie carrossée comprend un cadre (2), bordant ladite ouverture (5), entoilé avec ladite membrane.

5. Machine selon la revendication 4, **caractérisée en ce que** ladite membrane est tendue sur ledit cadre (2).

6. Machine selon les revendications 4 ou 5, **caractérisée en ce que** les dimensions du cadre (2) et le matériau de ladite membrane sont choisis de sorte que le temps de relaxation du cadre entoilé soit inférieur à la période dudit cycle.

7. Machine selon l'une des revendications 1 à 6, **caractérisée en ce que** ledit matériau de ladite membrane est un tissu (3) élastique sensiblement perméable à l'air et imperméable aux liquides.

8. Machine, à savoir presse automatique de façonnage, d'emballage en papier ou carton, selon l'une quelconque des revendications 1 à 7, **caractérisée en ce que** ladite ouverture (5) est agencée dans la partie de la carrosserie proximale du dispositif d'entraînement général de la presse.

## Patentansprüche

1. Eine Bogenverarbeitungsmaschine, arbeitend in Zyklen, während welchen ein beweglicher Maschinenteil einen zyklischen Luftüberdruck in einem verkleideten Teil der besagten Maschine produziert, **dadurch gekennzeichnet, dass** die Verkleidung (1) des besagten verkleideten Teils eine Öffnung (5) aufweist, auf deren Umfang eine Membrane befestigt ist, wobei das Material, aus welchem die besagte Membrane besteht, unter den elastischen, im wesentlichen undurchlässigen und gegen die Schmierungsmittel des besagten Maschinenteils beständigen Materialien ausgewählt wird, so dass sich die Membrane als Folge des momentanen internen Überdrucks füllt und dem Volumen des verkleideten Teils ein zusätzliches Volumen hinzufügt, welches momentan von mindestens einem Teil der Luft besetzt wird, die in Ermangelung dieser Vorrichtung in die Atmosphäre entweichen würde.

2. Maschine gemäss Patentanspruch 1, **dadurch gekennzeichnet, dass** das besagte Material der Membrane elastisch und im wesentlichen luftdurchlässig ist.

3. Maschine gemäss Patentanspruch 1 oder 2, **dadurch gekennzeichnet, dass** die besagte Membrane eine Einfassung in der Form eines Beutels, einer Blase oder eines Akkordeons bildet.

4. Maschine gemäss Patentanspruch 1 oder 2, **dadurch gekennzeichnet, dass** die besagte Verkleidung (1) des besagten verkleideten Teils einen Rahmen (2) umfasst, welcher die besagte Öffnung (5) einfasst und mit der besagten Membrane bespannt ist.

5. Maschine gemäss Patentanspruch 4, **dadurch gekennzeichnet, dass** die besagte Membrane auf dem besagten Rahmen (2) gespannt ist.

6. Maschine gemäss Patentanspruch 4 oder 5, **dadurch gekennzeichnet, dass** die Dimensionen des Rahmens (2) und das Material der besagten Membrane so ausgewählt werden, dass die Entspannungszeit des bespannten Rahmens kleiner ist als die Zyklusperiode.

7. Maschine gemäss einem der Patentansprüche 1 bis 6, **dadurch gekennzeichnet, dass** das besagte Material der besagten Membrane ein elastisches, im wesentlichen luftdurchlässiges und für Flüssigkeiten undurchlässiges Gewebe (3) ist.

8. Maschine, d.h. eine automatische Stanzpresse von Papier- oder Kartonverpackungen, gemäss irgendeinem der Patentansprüche 1 bis 7,
**dadurch gekennzeichnet, dass** die besagte Öffnung (5) im Teil der Verkleidung nahe der Hauptantriebsvorrichtung der Presse angeordnet ist.

## Claims

1. Machine for processing sheets and operating in cycles during which a movable part of the machine produces a cyclic excess pressure of air in a covered part of the said machine, **characterized in that** the body (1) of the said covered part has an opening (5), on the perimeter of which a diaphragm is fixed, the material, the diaphragm is made of, being chosen among the elastic materials, substantially impermeable and resistant to the products for lubricating the said part of the machine so that, as a result of the instantaneous internal excess pressure, the diaphragm inflates and increases the volume of the covered part by an additional volume which is instantaneously occupied by at least a part of the air which, in the absence of this device, would escape into the atmosphere.

2. Machine according to claim 1, **characterized in that** the said diaphragm material is elastic and substantially permeable to air.

3. Machine according to claims 1 or 2, **characterized in that** the said diaphragm forms a chamber in the shape of a pocket, bladder or concertina.

4. Machine according to claims 1 or 2, **characterized in that** the said body (1) of the said covered part comprises a frame (2), surrounding the said opening (5), covered with the said diaphragm.

5. Machine according to claim 4, **characterized in that** the said diaphragm is stretched on the said frame (2).

6. Machine according to claims 4 or 5, **characterized in that** the dimensions of the frame (2) and the diaphragm material are chosen so that the relaxation time of the covered frame is less than the cycle period.

7. Machine according to any of claims 1 to 6, **characterized in that** the said diaphragm material is an elastic fabric (3) substantially permeable to air and impermeable to liquids.

8. Machine, i.e. automatic diecutting press for paper or cardboard packaging, according to any of claims 1 to 7, **characterized in that** the said opening (5) is formed in the part of the body nearest the general drive device of the press.
